# EUROPÄISCHE PATENTSCHRIFT

(11) **EP 4 420 571 B1**
(45) Veröffentlichungstag und Bekanntmachung des Hinweises auf die Patenterteilung: **10.06.2026**
(21) Anmeldenummer: 24155590.3
(22) Anmeldetag: 02.02.2024
(51) Int. Cl.: A47J 31/52, A47J 31/36, A47J 31/44

(54) **SIEBTRÄGERMASCHINE ZUR ZUBEREITUNG EINES KAFFEEGETRÄNKS**
PORTAFILTER MACHINE FOR PREPARING A COFFEE BEVERAGE
MACHINE PORTE-FILTRE POUR PRÉPARER UNE BOISSON AU CAFÉ

(30) Priorität: 22.02.2023 DE 102023201627
(43) Veröffentlichungstag der Anmeldung: 28.08.2024
(73) Patentinhaber: BSH Hausgeräte GmbH, 81739 München (DE)
(72) Erfinder: Orth, Caroline, 82418 Seehausen (DE)

(56) Entgegenhaltungen:
- WO-A1-2015/073732
- US-A1- 2017 007 068
- US-A1- 2022 047 112
- WMF: "User Manual: WMF espresso", 1 October 2019 (2019-10-01), pages 1 - 96, XP093174446, Retrieved from the Internet <URL:https://www.ricmas.com/Wmf/machines/user_Manual/User%20Manual_espresso_EN.pdf> [retrieved on 20240613]
- WIKIPEDIA: "Touchscreen", 11 February 2023 (2023-02-11), wikipedia.org, pages 1 - 23, XP093174484, Retrieved from the Internet <URL:https://en.wikipedia.org/w/index.php?title=Touchscreen&oldid=1138679923> [retrieved on 20240613]

## Beschreibung

Die vorliegende Erfindung betrifft eine Siebträgermaschine zur Zubereitung eines Kaffeegetränks, welche ein Gehäuse sowie eine Bedienknopfeinrichtung am Gehäuse aufweist.

Siebträgermaschinen sind z.B. aus der WO 2015/073732 A1 und dem "User Manual: WMF espresso" (URL: https://www.ricmas.com/Wmf/machines/user Manual/User%20-Manual_espresso_EN.pdf) bekannt.

Eine Siebträgermaschine zur Zubereitung von Kaffeegetränken weist einen Siebträger auf, welche zur Zubereitung von Kaffeegetränken an einer Halterung der Siebträgermaschine wiederholbar anbringbar ist. Eine derartige Siebträgermaschine bietet einem Nutzer die Möglichkeit, Zubereitungsparameter zur Zubereitung von Kaffeegetränken variabel einzustellen und somit insbesondere individuell angepasste und qualitativ hochwertige Kaffeegetränke zuzubereiten. Derartige Siebträgermaschinen halten auch zunehmend Einzug in den privaten Bereich. Die Möglichkeit der Einstellung der Zubereitungsparameter geht üblicherweise mit entsprechend benötigten Kenntnissen der Zubereitungsparameter einher. Zudem ist die Einstellung der Zubereitungsparameter aufwendig.

Die vorliegende Erfindung beschäftigt sich mit der Aufgabe, für eine Siebträgermaschine der eingangs genannten Art verbesserte oder zumindest alternative Ausführungsformen anzugeben.

Diese Aufgabe wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem Grundgedanken, eine Siebträgermaschine mit einer Bedienknopfeinrichtung auszustatten, welche in der Art eines Knopfes oder zylinderförmig ausgebildet ist sowie lediglich einfach betätigbar ist und für unterschiedliche Konstellationen jeweils zugehörige Aktionen anbietet, wobei die jeweilige Aktion bei der einfachen Betätigung durch einen Nutzer durchgeführt wird. Somit wird die Bedingung der Siebträgermaschine für einen Nutzer erheblich vereinfacht.

Dem Erfindungsgedanken entsprechend weist die Siebträgermaschine ein Gehäuse, eine Halterung sowie einen Siebträger auf. Der Siebträger ist an der Halterung anbringbar, um ein Kaffeegetränk zuzubereiten. Die Siebträgermaschine weist ferner die Bedienknopfeinrichtung auf. Die Bedienknopfeinrichtung ist an einer Außenseite der Siebträgermaschine sichtbar und zugänglich, vorzugsweise am Gehäuse angeordnet. Die Bedienknopfeinrichtung ist einfach betätigbar und weist ein Display zur Ausgabe von zumindest zwei Anzeigen auf. Entsprechend ist das Display ausgestaltet. Die Siebträgermaschine weist ferner eine Steuereinrichtung auf, welcher derart ausgestaltet ist, dass sie über das Display für zumindest zwei Betriebszustände der Siebträgermaschine eine jeweils zugehörige Anzeige ausgibt. Zudem ist die Steuereinrichtung derart ausgestaltet, dass die Steuereinrichtung bei Betätigung der Bedienknopfeinrichtung eine von der aktuellen Anzeige abhängige Aktion ausführt.

Wie vorstehend erläutert, ist die Bedienknopfeinrichtung lediglich einfach betätigbar. Das heißt, dass die Bedienknopfeinrichtung vorzugsweise keine unterschiedlichen Betätigungen ermöglicht bzw. keine Auswahl unterschiedlicher Betätigungen anbietet, sondern nur eine einfache Betätigung. Die Bedienknopfeinrichtung ist also in der Art einer sogenannten "One-Touch-Bedienung" betätigbar. Die unterschiedlichen Aktionen bei stets selber Betätigung der Bedienknopfeinrichtung erfolgen also aufgrund der und abhängig von den unterschiedlichen Anzeigen über das Display der Bedienknopfeinrichtung.

Die jeweilige Aktion ist vorzugsweise eine solche, welche die Siebträgermaschine und/oder den Betrieb der Siebträgermaschine zumindest mittelbar betrifft.

Unter einem Betriebszustand ist vorliegend ein beliebiger Zustand der Siebträgermaschine zu verstehen. Hierzu zählen beispielsweise die Betriebsbereitschaft oder ein Mangel an zur Zubereitung eines Kaffeegetränks benötigten Ressourcen, beispielsweise von Wasser und/oder von Kaffee.

Die Steuereinrichtung ist zweckmäßig kommunizierend mit der Bedienknopfeinrichtung verbunden, sodass sie mittels des Displays die jeweilige Anzeige anzeigt und die Betätigung der Bedienknopfeinrichtung erkennt.

Der Siebträger ist vorteilhaft über eine Vorderseite des Gehäuses an der Halterung anbringbar.

Bevorzugt ist die Bedienknopfeinrichtung an der Vorderseite angeordnet. Dies führt zu einer vereinfachten Bedienung der Siebträgermaschine mittels der Bedienknopfeinrichtung.

Die Bedienknopfeinrichtung ist an der Außenseite, insbesondere an der Vorderseite, in der Art eines Knopfes, beispielsweise eines runden Knopfes bzw. zylinderförmig, ausgebildet. Dies führt zu einer verbesserten Integration der Bedienknopfeinrichtung an der Außenseite der Siebträgermaschine und/oder zu einer möglichst geringen Änderung des ursprünglichen Erscheinungsbilds der Siebträgermaschine.

Bei einer Variante ist die Steuereinrichtung derart ausgestaltet ist, dass sie bei einem betriebsbereiten Zustand über das Display eine zugehörige Anzeige anzeigt, welche nachfolgend auch als betriebsbereit-Anzeige bezeichnet wird. Ferner ist die Steuereinrichtung derart ausgestaltet, dass sie bei Betätigung der Bedienknopfeinrichtung ein Kaffeegetränk zubereitet. Zeigt also das Display die Betriebsbereit-Anzeige und wird die Bedienknopfeinrichtung betätigt, wird als Aktion ein Kaffeegetränk zubereitet. Somit ist die Zubereitung von Kaffeegetränken auf einfache umgesetzt, wobei zugleich auf einen separaten Taster oder Betätiger zur Zubereitung von Kaffeegetränken verzichtet werden kann.

Bei einer Variante ist die Steuereinrichtung derart ausgestaltet ist, dass sie bei fehlendem Kaffee oder bevorstehendem vollständigem Verbrauch von Kaffee in einem Behälter der Siebträgermaschine über das Display eine zugehörige Anzeige anzeigt, welche nachfolgend auch als Kaffeemangel-Anzeige bezeichnet wird. Zudem ist die Steuereinrichtung derart ausgestaltet, dass sie bei Betätigung der Bedienknopfeinrichtung den Erwerb von neuem Kaffee anbietet. Zeigt also das Display die Kaffeemangel-Anzeige und wird die Bedienknopfeinrichtung betätigt, wird als Aktion der Erwerb von Kaffee angeboten. Auf diese Weise wird der Komfort erheblich erhöht.

Die Siebträgermaschine, insbesondere die Steuereinrichtung, ist dabei zweckmäßig zur Erkennung von fehlendem Kaffee oder bevorstehendem vollständigen Verbrauch von Kaffee im Behälter ausgestaltet.

Das Anbieten des Erwerbs von Kaffee kann mittels der Bedienknopfeinrichtung erfolgen. Hierzu kann das Display eine zugehörige Anzeige anzeigen, wobei bei Betätigung der Bedienknopfeinrichtung eine Bestellung zum Erwerb von Kaffee erfolgt.

Alternativ oder zusätzlich kann das Anbieten des Erwerbs von Kaffee über eine von der Siebträgermaschine separaten Einrichtung, vorzugsweise über ein smartes Gerät, beispielsweise über ein Smartphone, erfolgen. Entsprechend sind die Siebträgermaschine und die Einrichtung miteinander kommunizieren verbunden.

Bei vorteilhaften Ausführungsformen weist die Siebträgermaschine einen Scanner zum optischen Scannen von Codes auf, wobei der jeweilige Code von einer zugehörigen Sorte von Kaffee abhängig ist. Ferner ist die Steuereinrichtung derart ausgestaltet, dass sie Zubereitungsparameter der Siebträgermaschine abhängig vom gescannten Code einstellt. Das heißt, dass zumindest ein Teil der Zubereitungsparameter automatisch eingestellt werden kann und somit keine manuelle Einstellung erfordert. Dies führt zu einer erheblich vereinfachten Bedienung der Siebträgermaschine und somit zu einer erheblichen Verbesserung des Komforts.

Zu den Zubereitungsparametern gehören insbesondere ein Wasserdruck, eine Wassertemperatur sowie ein Mahlgrad, sofern die Siebträgermaschine ein Mahlwerk aufweist.

Beim Code kann es sich prinzipiell um einen beliebigen Code handeln. Beispielsweise handelt es sich beim jeweiligen Code um einen Strichcode oder um einen QR-Code.

Der Code ist vorteilhaft an einer Kaffeeverpackung zur Aufnahme von Kaffee vorgesehen, wobei der Code von der in der Kaffeeverpackung aufgenommenen Sorte Kaffee abhängig ist.

Der Scanner ist bevorzugt dem Display benachbart angeordnet. Insbesondere ist der Scanner an der Vorderseite angeordnet.

Vorteilhaft sind Ausführungsformen, bei welchen die Bedienknopfeinrichtung den Scanner aufweist. Somit kommt es zu einer vereinfachten Ausbildung der Siebträgermaschine, wobei das ursprüngliche Erscheinungsbild der Siebträgermaschine möglichst erhalten bleibt.

Bei einer Variante ist die Steuereinrichtung derart ausgestaltet, dass sie beim Nachfüllen von Kaffee in einen Behälter der Siebträgermaschine über das Display eine Anzeige anzeigt, welche nachfolgend auch als Scann-Anzeige bezeichnete wird, und den Scanner zum Scannen eines Codes aktiviert. Wird also Kaffee nachgefüllt, wird mit der Scann-Anzeige einem Nutzer die Möglichkeit signalisiert, über den Scanner einen zugehörigen Code zu scannen, sodass zugehörige Zubereitungsparameter eingestellt werden können. Dies führt zu einem erhöhten Komfort für den Nutzer, wobei zugleich das ursprüngliche Erscheinungsbild der Siebträgermaschine möglichst erhalten bleibt.

Bei bevorzugten Ausführungsformen ist das Display zur Ausgabe von zumindest zwei verschiedenen Mustern sowie von zumindest zwei verschiedenen Farben ausgestaltet, wobei dem jeweiligen Muster eine Farbe zugeordnet ist. Dabei gibt die Steuereinrichtung über das Display für zumindest zwei Betriebszustände der Siebträgermaschine ein jeweils zugehöriges Muster sowie die zugehörige Farbe als zugehörige Anzeige aus. Entsprechend ist die Steuereinrichtung ausgestaltet. Zumindest zwei der Anzeigen, vorteilhaft die jeweilige Anzeige, setzt sich also aus einem Muster und einer Farbe zusammen. Dies hat den Vorteil, dass die Anzeige auch peripher vereinfacht wahrnehmbar ist. Die Ausgabe der Farbe kann insbesondere mittels eines Lichtrings erfolgen

Die Farbe ermöglicht es ferner, einem Nutzer abhängig von der Farbe zu signalisieren, ob eine Handlung des Nutzers notwendig ist oder erwartet wird. Beispielsweise kann grün für die Betriebsbereitschaft, blau für einen leeren Wassertank, rot/braun für einen leeren Behälter bzw. einen bevorstehenden vollständigen Verbrauch von Kaffee im Behälter, weiß für die Scann-Anzeige usw. verwendet werden.

Die Betätigung der Bedienknopfeinrichtung kann mechanisch umgesetzt sein. Die Bedienknopfeinrichtung kann also insbesondere in der Art eines federbelasteten Druckknopfs betätigbar sein.

Bei bevorzugten Ausführungsformen ist die Bedienknopfeinrichtung berührungsempfindlich und somit einfach betätigbar. Die Bedienknopfeinrichtung weist dabei bevorzugt eine auf dem Display aufgebrachte berührungsempfindliche Folie zur einfachen Betätigung der Bedienknopfeinrichtung auf. Insbesondere kann das Display ein berührungsempfindliches Display sei. Somit kommt es zu einer vereinfachten Umsetzung der einfachen Betätigbarkeit der Bedienknopfeinrichtung.

Vorstellbar ist es, dass der Scanner dem Display benachbart und auf der von der Außenseite abgewandten Seite der berührungsempfindlichen Folie angeordnet ist, wobei die Folie im Bereich des Scanners ausgespart ist. Dies führt insbesondere dazu, dass der Scanner von außen nicht oder erschwert sichtbar ist. Auf diese Weise wird das ursprüngliche Erscheinungsbild der Siebträgermaschine möglichst erhalten.

Vorteilhaft weist die Bedienknopfeinrichtung eine auf der Folie angebrachte Schutzlage, insbesondere aus Glas, auf. Somit kommt es zu einer erhöhten Lebensdauer/Beständigkeit der Bedienknopfeinrichtung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

### Es zeigen, jeweils schematisch:

- Fig. 1: eine isometrische Ansicht einer Siebträgermaschine mit einer Bedienknopfeinrichtung mit einer ersten Anzeige durch die Bedienknopfeinrichtung,
- Fig. 2: eine isometrische Ansicht der Siebträgermaschine in Bereich der Bedienknopfeinrichtung,
- Fig. 3: eine Explosionsdarstellung der Bedienknopfeinrichtung in Draufsicht,
- Fig. 4: eine isometrische Ansicht einer Siebträgermaschine mit einer zweiten Anzeige durch die Bedienknopfeinrichtung,
- Fig. 5: eine isometrische Ansicht der Siebträgermaschine in Bereich der Bedienknopfeinrichtung mit der zweiten Anzeige,
- Fig. 6: eine isometrische Ansicht der Siebträgermaschine in Bereich der Bedienknopfeinrichtung mit einer dritten Anzeige,
- Fig. 7: eine isometrische Ansicht der Siebträgermaschine in Bereich der Bedienknopfeinrichtung mit einer vierten Anzeige.

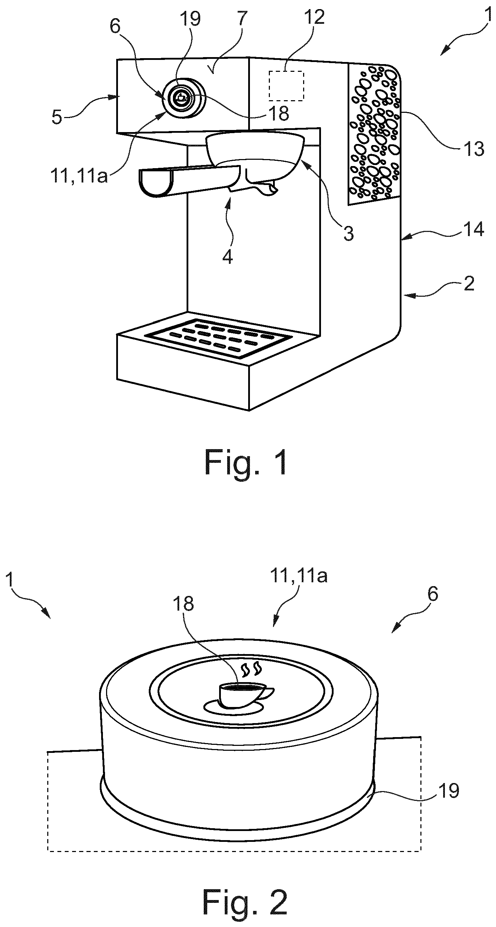

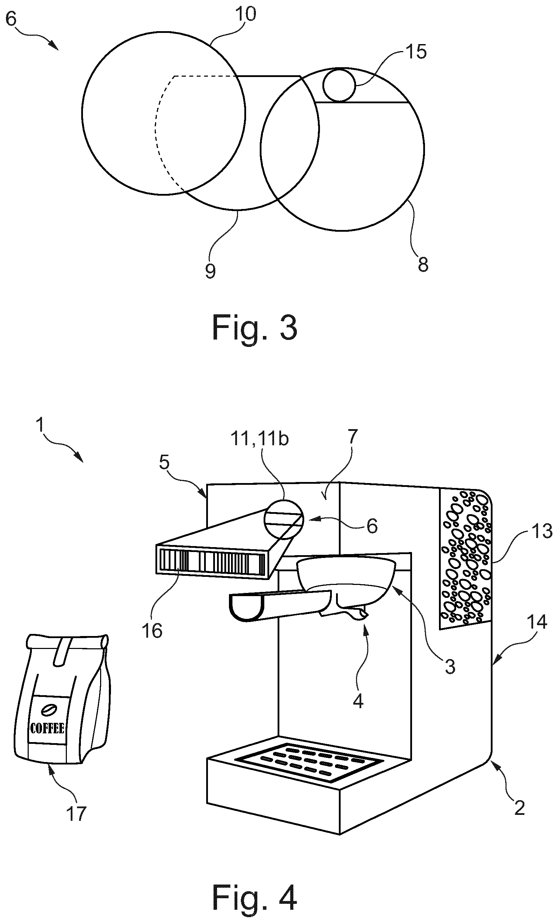

Eine Siebträgermaschine 1, wie sie beispielsweise in den Figuren 1, 2 sowie 4 bis 7 gezeigt ist, dient der Zubereitung von Kaffeegetränken. Die Siebträgermaschine 1 weist ein Gehäuse 2 sowie eine Halterung 3 für einen Siebträger 4 auf, wie den Figuren 1 und 4 entnommen werden kann. Der Siebträger 4 ist zur Zubereitung von Kaffeegetränken lösbar an der Halterung 3 anbringbar. Dies erfolgt in den gezeigten Ausführungsbeispielen über eine Vorderseite 5 der Siebträgermaschine 1 bzw. des Gehäuses 2. Die Siebträgermaschine weist zudem eine Bedienknopfeinrichtung 6 auf, die an einer Außenseite 7, in den gezeigten Ausführungsbeispielen an der Vorderseite 5, sichtbar und zugänglich ist. In den gezeigten Ausführungsbeispielen ist die Bedienknopfeinrichtung 6 an der Vorderseite 5 in der Art eines Knopfes bzw. zylinderförmig ausgebildet.

Entsprechend Figur 3 weist die Bedienknopfeinrichtung 6 ein Display 8 auf, welches zur Ausgabe von zumindest zwei Anzeigen 11 ausgestaltet ist. Die Bedienknopfeinrichtung 6 ist einfach betätigbar, wobei dies in den gezeigten Ausführungsbeispielen durch eine Berührung der Bedienknopfeinrichtung 6 erfolgt. Zu diesem Zweck weist die Bedienknopfeinrichtung 6 in den gezeigten Ausführungsbeispielen eine auf dem Display 8 aufgebrachte berührungsempfindliche Folie 9 auf. Zudem weist in den gezeigten Ausführungsbeispielen die Bedienknopfeinrichtung 6 eine auf der Folie 9 angebrachte Schutzlage 10 aus Glas auf. Die Siebträgermaschine 1 weist zudem eine lediglich in Figur 1 gezeigte Steuereinrichtung 12 auf, wobei die Steuereinrichtung 12 Figur 1 schematisch und gestrichelt dargestellt ist. Die Steuereinrichtung 12 ist vorzugsweise innerhalb des Gehäuses 2 angeordnet. Die Steuereinrichtung 12 ist kommunizierend mit der Bedienknopfeinrichtung 6 verbunden. Dabei ist die Steuereinrichtung 12 derart ausgestaltet, dass sie über das Display 8 für zumindest zwei Betriebszustände der Siebträgermaschine 1 eine jeweils zugehörige Anzeige 11 ausgibt. Zudem ist die Steuereinrichtung12 derart ausgestaltet, dass sie bei Betätigung der Bedienknopfeinrichtung 6 eine von der aktuellen Anzeige 11 abhängige Aktion ausführt.

In den gezeigten Ausführungsbeispielen weist die Siebträgermaschine 1 ferner einen Behälter 13 zur Aufnahme und Nachfüllen von Kaffee auf, welcher in den gezeigten Ausführungsbeispielen an einer von der Vorderseite 5 abgewandten Rückseite 14 der Siebträgermaschine 1 bzw. des Gehäuses 2 angeordnet ist.

Wie in den Figuren 1 und 2 gezeigt, ist die Steuereinrichtung 12 derart ausgestaltet ist, dass sie bei einem betriebsbereiten Zustand über das Display 8 eine entsprechende Anzeige 11, 11a ausgibt, welche nachfolgend auch als Betriebsbereit-Anzeige 11, 11a bezeichnet wird. Ferner ist die Steuereinrichtung 12 derart ausgestaltet, dass sie bei Betätigung der Bedienknopfeinrichtung 6 ein Kaffeegetränk zubereitet und somit die Zubereitung eines Kaffeegetränks als Aktion ausführt. Ist die Siebträgermaschine 1 also betriebsbereit, wird die Betriebsbereit-Anzeige 11, 11a angezeigt und bei Betätigung der Bedienknopfeinrichtung 6 ein Kaffeegetränk zubereitet.

In den gezeigten Ausführungsbeispielen weist die Siebträgermaschine 1, wie Figur 3 entnommen werden kann, einen Scanner 15 auf, welcher in den gezeigten Ausführungsbeispielen Bestandteil der Bedienknopfeinrichtung 6 ist. Mit dem Scanner 15 können Codes 16 (siehe Figur 4) optisch eingescannt werden. Entsprechend Figur 3 ist in den gezeigten Ausführungsbeispielen der Scanner 15 dem Display 8 benachbart angeordnet, wobei die Folie 9 im Bereich des Scanners 15 ausgespart ist. Wie in Figur 4 angedeutet, ist der jeweilige Code 16 von einer zugehörigen Sorte von Kaffee abhängig und kann an einer Kaffeeverpackung 17 zur Aufnahme von Kaffee vorgesehen und von der in der Kaffeeverpackung 17 aufgenommenen Sorte Kaffee abhängig sein. Die Steuereinrichtung 12 ist derart ausgestaltet, dass sie beim Nachfüllen von Kaffee in den Behälter 13 über das Display 8 eine zugehörige Anzeige 11, 11b anzeigt, welche nachfolgend auch als Scan-Anzeige 11, 11b bezeichnet wird. Wird also Kaffee in den Behälter 13 nachgefüllt, wird die Scan-Anzeige 11, 11b angezeigt, wobei die Steuereinrichtung 12 ferner den Scanner 15 aktiviert, sodass mittels des Scanners 15 ein entsprechender Code 16 eingelesen werden kann. Wird ein Code 16 eingelesen, erfolgt mittels der Steuereinrichtung 12 die automatische Einstellung zumindest eines Zubereitungsparameters der Siebträgermaschine 1. Zur automatischen Einstellung kann die Steuereinrichtung 12 über das Display 8 einer weitere, nicht gezeigte Anzeige 11 anzeigen, wenn ein Code 16 erfolgreich eingelesen wurde und bei Betätigung der Bedienknopfeinrichtung 6 Zubereitungsparameter einstellen. Das heißt, dass die Steuereinrichtung 12 derart ausgestaltet ist, dass sie
Zubereitungsparameter der Siebträgermaschine 1 abhängig vom gescannten Code 16 insbesondere bei Betätigung der Bedienknopfeinrichtung 6, einstellt. Zu den Zubereitungsparametern gehören ein Wasserdruck, eine Wassertemperatur und, sofern die Siebträgermaschine 1 über ein nicht gezeigtes Mahlwerk verfügt, ein Mahlgrad von Kaffee.

In den gezeigten Ausführungsbeispielen ist die Steuereinrichtung 12 alternativ oder zusätzlich derart ausgestaltet, dass sie bei fehlendem Kaffee oder bevorstehendem vollständigem Verbrauch von Kaffee im Behälter 13 über das Display 8 eine zugehörige Anzeige 11, 11c anzeigt, welche nachfolgend auch als Kaffeemangel-Anzeige 11, 11c bezeichnet wird. Dabei kann die Steuereinrichtung 12 ferner derart ausgestaltet sein, dass die bei Betätigung der Bedienknopfeinrichtung 6 den Erwerb von neuem Kaffee anbietet. Wird also die Kaffeemangel-Anzeige 11, 11 c angezeigt und die Bedienknopfeinrichtung 6 betätigt, kann der Erwerb von Kaffee angeboten werden. Das Anbieten und der Erwerb kann mittels der Bedienknopfeinrichtung 6 oder mittels einer separaten, nicht gezeigten Einrichtung, beispielsweise mittels eines Smartphones, erfolgen.

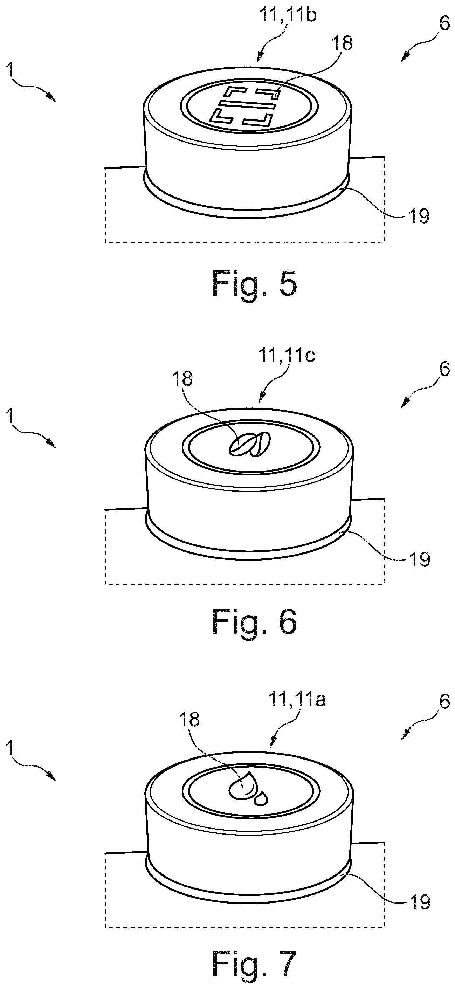

Vorstellbar ist es zudem, bei einem notwendigen Nachfüllen von Wasser in einen nicht gezeigten Wassertank der Siebträgermaschine 1 dies mittels einer zugehörigen, in Figur 7 gezeigten, Anzeige 11, 11d anzuzeigen, welche nachfolgend auch als Wassermangel-Anzeige 11, 11d bezeichnet wird. Entsprechend ist die Steuereinrichtung 12 ausgestaltet.

In den gezeigten Ausführungsbeispielen ist das Display 8, wie beispielsweise in den Figuren 2 sowie 5 bis 7 angedeutet, zur Ausgabe von zumindest zwei verschiedenen Mustern 18 sowie von zumindest zwei verschiedenen Farben ausgestaltet, wobei die Farbausgabe in den gezeigten Ausführungsbeispielen über einen Lichtring 19 erfolgt. Dem jeweiligen Muster 18 ist ferner eine Farbe zugeordnet, sodass sich zumindest zwei der Anzeigen 11, in den gezeigten Ausführungsbeispielen die jeweilige Anzeige 11, aus einem zugehörigen Muster 18 und einer zugehörigen Farbe, in den gezeigten Ausführungsbeispielen ausgegeben mittels des Lichtrings 19, zusammensetzt. Dies führt zu einer vereinfachten peripheren Wahrnehmung der jeweiligen Anzeige 11. Zudem ist es auf diese Weise möglich, der jeweiligen Anzeige 11 und somit dem jeweiligen Betriebszustand eine Farbe zuzuordnen, um beispielsweise zu signalisieren, ob eine unmittelbare Handlung eines Nutzers erforderlich ist. Beispielsweise kann der Kaffeemangel-Anzeige 11, 11c die Farbe Rot oder Braun zugeordnet sein. Vorstellbar ist es zudem der Wassermangel-Anzeige 11, 11d die Farbe Blau zuzuordnen.

### Bezugszeichen

- 1: Siebträgermaschine
- 2: Gehäuse
- 3: Halterung
- 4: Siebträger
- 5: Vorderseite
- 6: Bedienknopfeinrichtung
- 7: Außenseite
- 8: Display
- 9: berührungsempfindliche Folie
- 10: Schutzlage
- 11: Anzeige
- 11a: Betriebsbereit-Anzeige
- 11b: Scann-Anzeige
- 11c: Kaffeemangel-Anzeige
- 11d: Wassermangel-Anzeige
- 12: Steuereinrichtung
- 13: Behälter
- 14: Rückseite
- 15: Scanner
- 16: Code
- 17: Kaffeeverpackung
- 18: Muster
- 19: Lichtring

## Patentansprüche

1. Siebträgermaschine (1) zur Zubereitung eines Kaffeegetränks; mit einem Gehäuse (2)
und mit einer Halterung (3) für einen Siebträger (4) der Siebträgermaschine (1), sodass der Siebträger (4) an der Halterung (3) anbringbar ist; mit einer an einer Außenseite (7) der Siebträgermaschine (1) sichtbaren und zugänglichen Bedienknopfeinrichtung (6), welche in der Art eines Knopfes oder zylinderförmig ausgebildet ist und welche zur Ausgabe von zumindest zwei Anzeigen (11) ein Display (8) aufweist; wobei die Bedienknopfeinrichtung (6) einfach betätigbar ist; mit einer Steuereinrichtung (12), welche derart ausgestaltet ist, dass sie über das Display (8) für zumindest zwei Betriebszustände der Siebträgermaschine (1) eine jeweils zugehörige Anzeige (11) ausgibt, und derart, dass die Steuereinrichtung (12) bei Betätigung der Bedienknopfeinrichtung (6) eine von der aktuellen Anzeige (11) abhängige Aktion ausführt.

2. Siebträgermaschine nach Anspruch 1, **dadurch gekennzeichnet, dass** die Steuereinrichtung (12) derart ausgestaltet ist, dass sie bei einem betriebsbereiten Zustand über das Display (8) eine Betriebsbereit-Anzeige (11, 11a) anzeigt und bei Betätigung der Bedienknopfeinrichtung (6) ein Kaffeegetränk zubereitet.

3. Siebträgermaschine nach Anspruch 1 oder 2, **dadurch gekennzeichnet, dass** die Steuereinrichtung (12) derart ausgestaltet ist, dass sie bei fehlendem Kaffee oder bevorstehendem vollständigem Verbrauch von Kaffee in einem Behälter (13) der Siebträgermaschine (1) über das Display (8) eine Kaffeemangel-Anzeige (11, 11c) anzeigt und bei Betätigung der Bedienknopfeinrichtung (6) den Erwerb von neuem Kaffee anbietet.

4. Siebträgermaschine nach einem der Ansprüche 1 bis 3, **dadurch gekennzeichnet, dass** die Siebträgermaschine (1) einen Scanner (15) zum optischen Scannen von Codes (16) aufweist, wobei der jeweilige Code (16) von einer zugehörigen Sorte von Kaffee abhängig ist; und wobei die Steuereinrichtung (12) derart ausgestaltet ist, dass sie Zubereitungsparameter der Siebträgermaschine (1) abhängig vom gescannten Code (16) einstellt.

5. Siebträgermaschine nach Anspruch 4, **dadurch gekennzeichnet, dass** die Bedienknopfeinrichtung (6) den Scanner (15) aufweist.

6. Siebträgermaschine nach Anspruch 4 oder 5, **dadurch gekennzeichnet, dass** die Steuereinrichtung (12) derart ausgestaltet ist, dass sie beim Nachfüllen von Kaffee in einen Behälter (13) der Siebträgermaschine (1) über das Display (8) eine Scann-Anzeige (11, 11b) anzeigt und den Scanner (15) zum Scannen von Codes (16) aktiviert.

7. Siebträgermaschine nach einem der Ansprüche 1 bis 6, **dadurch gekennzeichnet, dass** die Bedienknopfeinrichtung (6) eine auf dem Display (8) aufgebrachte berührungsempfindliche Folie (9) zur einfachen Betätigung der Bedienknopfeinrichtung (6) aufweist.

8. Siebträgermaschine nach Anspruch 7 und Anspruch 5 oder 6, **dadurch gekennzeichnet, dass** der Scanner (15) dem Display (8) benachbart angeordnet ist, wobei die Folie (9) im Bereich des Scanners (15) ausgespart ist.

9. Siebträgermaschine nach Anspruch 7 oder 8, **dadurch gekennzeichnet, dass** die Bedienknopfeinrichtung (6) eine auf der Folie (9) angebrachte Schutzlage (10), insbesondere aus Glas, aufweist.

10. Siebträgermaschine nach einem der Ansprüche 1 bis 9, **dadurch gekennzeichnet, dass** das Display (8) zur Ausgabe von zumindest zwei verschiedenen Mustern (18) sowie von zumindest zwei verschiedenen Farben ausgestaltet ist, wobei dem jeweiligen Muster (18) eine Farbe zugeordnet ist, sodass die Steuereinrichtung (12) über das Display (8) für zumindest zwei Betriebszustände der Siebträgermaschine ein jeweils zugehöriges Muster (18) sowie die zugehörige Farbe als zugehörige Anzeige (11) ausgibt.

## Claims

1. Portafilter machine (1) for preparing a coffee beverage; with a housing (2) and with a holder (3) for a portafilter (4) of the portafilter machine (1), so that the portafilter (4) can be attached to the holder (3); with an operating knob facility (6), which can be seen and accessed on an outer side (7) of the portafilter machine (1) and which is embodied in the manner of a knob or in the shape of a cylinder and which has a display (8) for outputting at least two indications (11); wherein the operating knob facility (6) is simple to actuate; with a control facility (12), which is embodied in such a manner that it outputs an associated indication (11) in each case via the display (8) for at least two operating states of the portafilter machine (1), and in such a manner that the control facility (12) carries out an action that is dependent upon the current indication (11) when the operating knob facility (6) is actuated.

2. Portafilter machine according to claim 1, **characterised in that** the control facility (12) is embodied in such a manner that it indicates a ready indication (11, 11a) via the display (8) in a ready state, and prepares a coffee beverage when the operating knob facility (6) is actuated.

3. Portafilter machine according to claim 1 or 2, **characterised in that** the control facility (12) is embodied in such a manner that it indicates a low coffee indication (11, 11c) via the display (8) when there is a lack of coffee or when coffee in a container (13) of the portafilter machine (1) will soon be fully consumed, and offers the purchase of new coffee when the operating knob facility (6) is actuated.

4. Portafilter machine according to one of claims 1 to 3, **characterised in that** the portafilter machine (1) has a scanner (15) for optically scanning codes (16), wherein the respective code (16) is dependent upon an associated variety of coffee, and wherein the control facility (12) is embodied in such a manner that it sets preparation parameters of the portafilter machine (1) depending on the scanned code (16).

5. Portafilter machine according to claim 4, **characterised in that** the operating knob facility (6) has the scanner (15).

6. Portafilter machine according to claim 4 or 5, **characterised in that** the control facility (12) is embodied in such a manner that it indicates a scan indication (11, 11b) via the display (8) when coffee is refilled in a container (13) of the portafilter machine (1), and activates the scanner (15) for scanning codes (16).

7. Portafilter machine according to one of claims 1 to 6, **characterised in that** the operating knob facility (6) has a touch-sensitive film (9) applied to the display (8) for simple actuation of the operating knob facility (6).

8. Portafilter machine according to claim 7 and claim 5 or 6, **characterised in that** the scanner (15) is arranged adjacently to the display (8), wherein the film (9) is omitted in the region of the scanner (15).

9. Portafilter machine according to claim 7 or 8, **characterised in that** the operating knob facility (6) has a protective layer (10), in particular made of glass, which is attached to the film (9).

10. Portafilter machine according to one of claims 1 to 9, **characterised in that** the display (8) is embodied for outputting at least two different patterns (18) as well as at least two different colours, wherein the respective pattern (18) is assigned a colour, so that, for at least two operating states of the portafilter machine, the control facility (12) outputs an associated pattern (18) in each case as well as the associated colour as an associated indication (11) via the display (8).

## Revendications

1. Machine à porte-filtre (1) pour préparer une boisson au café, comprenant
un boîtier (2) et un support (3) pour un porte-filtre (4) de la machine à porte-filtre (1), de sorte que le porte-filtre (4) peut être monté sur le support (3), et comprenant un dispositif de commande à bouton (6) visible et accessible sur un côté extérieur (7) de la machine à porte-filtre (1), qui est réalisé sous forme d'un bouton ou qui est de forme cylindrique et qui comprend un afficheur (8) pour afficher au moins deux indications visuelles (11),
dans laquelle le dispositif de commande à bouton (6) peut être aisément actionné, et comprenant en outre une unité de commande (12), qui est configurée de telle sorte qu'elle génère une indication visuelle correspondante (11) pour au moins deux états de fonctionnement de la machine à porte-filtre (1) sur l'afficheur (8) et de telle sorte que l'unité de commande (12) exécute une action qui dépend de l'indication visuelle instantanée (11) lorsqu'on actionne le dispositif de commande à bouton (6).

2. Machine à porte-filtre selon la revendication 1, **caractérisée en ce que** l'unité de commande (12) est configurée de telle sorte qu'elle affiche, dans un état prêt à l'emploi, une indication visuelle de prêt à l'emploi (11, 11a) sur l'afficheur (8) et prépare une boisson au café lors de l'actionnement du dispositif de commande à bouton (6).

3. Machine à porte-filtre selon la revendication 1 ou 2, **caractérisée en ce que** l'unité de commande (12) est configurée de telle sorte qu'en cas de manque de café ou d'épuisement imminent du café dans un récipient (13) de la machine à porte-filtre (1), elle génère sur l'afficheur (8) une indication visuelle de manque de café (11, 11c) et elle invite, lors de l'actionnement du dispositif de commande à bouton (6), à réapprovisionner en café.

4. Machine à porte-filtre selon l'une des revendications 1 à 3, **caractérisée en ce que** la machine à porte-filtre (1) comprend un lecteur optique (15) permettant une lecture optique de codes (16), dans lequel le code respectif (16) est associé à une variété correspondante de café, et dans lequel l'unité de commande (12) est configurée de sorte à régler les paramètres de préparation de la machine à porte-filtre (1) en fonction du code lu (16).

5. Machine à porte-filtre selon la revendication 4, **caractérisée en ce que** le dispositif de commande à bouton (6) comprend le lecteur optique (15).

6. Machine à porte-filtre selon la revendication 4 ou 5, **caractérisée en ce que** l'unité de commande (12) est configurée de sorte qu'elle génère une indication visuelle de lecture optique (11, 11b) sur l'afficheur (8) lorsqu'un café est ajouté dans un récipient (13) de la machine à porte-filtre (1) et active le lecteur optique (15) pour lire un code (16).

7. Machine à porte-filtre selon l'une des revendications 1 à 6, **caractérisée en ce que** le dispositif de commande à bouton (6) comprend un film sensible au toucher (9) appliqué sur le dispositif d'affichage (8) permettant un actionnement aisé du dispositif de commande à bouton (6).

8. Machine à porte-filtre selon la revendication 7 et la revendication 5 ou 6, **caractérisée en ce que** le lecteur optique (15) est disposé à proximité de l'afficheur (8), le film (9) étant ajouré dans la zone du lecteur optique (15).

9. Machine à porte-filtre selon la revendication 7 ou 8, **caractérisée en ce que** le dispositif de commande à bouton (6) comprend une couche de protection (10) apposée sur le film (9), en particulier en verre.

10. Machine à porte-filtre selon l'une des revendications 1 à 9, **caractérisée en ce que** l'afficheur (8) est configuré pour représenter au moins deux motifs distincts (18) ainsi qu'au moins deux couleurs différentes, une couleur étant attribuée à un motif respectif (18) de sorte que l'unité de commande (12) génère sur l'afficheur (8), pour au moins deux états de fonctionnement de la machine à porte-filtre, un motif correspondant (18) respectif ainsi que la couleur correspondante à titre d'indication visuelle respective (11).
